(19) Europäisches Patentamt / European Patent Office / Office européen des brevets

(11) **EP 2 815 158 B1**

(12) **EUROPEAN PATENT SPECIFICATION**

(45) Date of publication and mention
of the grant of the patent:
**28.10.2015 Bulletin 2015/44**

(51) Int Cl.:
*F16J 15/18* *(2006.01)*      *F16J 15/32* *(2006.01)*
*F16J 15/34* *(2006.01)*      *F16J 15/36* *(2006.01)*

(21) Application number: **13750844.6**

(22) Date of filing: **10.07.2013**

(86) International application number:
**PCT/EP2013/002031**

(87) International publication number:
**WO 2014/173424 (30.10.2014 Gazette 2014/44)**

(54) **SLIDE RING SEAL**

GLEITRINGDICHTUNG

JOINT D'ÉTANCHÉITÉ À ANNEAU DE GLISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2013   DE 102013006839**

(43) Date of publication of application:
**24.12.2014   Bulletin 2014/52**

(73) Proprietor: **Carl Freudenberg KG
69469 Weinheim (DE)**

(72) Inventors:
• **NEUBERGER, Soeren
68766 Hockenheim (DE)**

• **LANG, Klaus
82547 Eurasburg (DE)**

(74) Representative: **Wesch, Arno
European Patent Attorney
Carl Freudenberg KG
Patent und Marken
Höhnerweg 2-4
69469 Weinheimm (DE)**

(56) References cited:
DE-A1-102011 114 349      ES-T3- 2 159 958
GB-A- 2 061 411      US-A1- 2004 070 151
US-A1- 2004 245 729

EP 2 815 158 B1

**Description**

Technical field

The invention relates to a slide ring seal as per the preamble of Patent Claim 1.

Prior art

GB 2 061 411 A discloses a slide ring seal having features of the preamble of Patent Claim 1. ES 2 159 958 T3 discloses also a slide ring seal. US 2004/0245 729 A1 shows a sealing element provided with a nonwoven material and US 2004/0070 151 A1 shows an axial shaft seal comprising an outer ring including a sleeve having a spring bellows form.

DE 10 2011 114 349 A1 has already disclosed a slide ring seal having a bellows-like spring means. In the case of the slide ring seal described above, the counterpart ring is accommodated in a supporting ring, wherein the supporting ring in turn is assigned to a shaft. The supporting ring is fixedly connected to the shaft so as to drive the counterpart ring along during a rotation of the shaft.

In the case of said configuration, it may be a problem that both the supporting ring and also the counterpart ring must be mounted on the shaft with a particularly high level of accuracy. As the supporting ring is being pressed onto the shaft, a required conicity, in particular of the counterpart ring, can be adversely affected. There is therefore a demand for slide ring seals in which a positional error of the counterpart ring virtually cannot occur. It is furthermore desirable for the slide ring seal to exhibit a high level of operational capability and to be robust.

Presentation of the invention

It is therefore the object of the invention to refine and develop a slide ring seal of the type specified in the introduction such that, while being inexpensive and easy to manufacture and having a construction involving a particularly small number of components, it seals off two chambers in a reliable and permanent manner.

The present invention achieves the above-stated object by means of the features of Patent Claim 1.

According to invention, it has firstly been identified that a separate supporting ring can be dispensed with. By contrast to the prior art, the counterpart ring is specifically not accommodated in a supporting ring which must be manufactured as a separate part. Rather, the counterpart ring has an axial projection which can be assigned to a shaft in order to fix the counterpart ring on the shaft. It is provided according to the invention that the projection and the counterpart ring are formed in one piece, and preferably in a materially integral manner. In this respect, the supporting ring which is conventionally used in the prior art is integrated into the counterpart ring. This yields a significant simplification of the construction of the slide ring seal. In particular, an initially required conicity can be set already during the manufacture of the counterpart ring and of the projection thereof at the factory. According to the invention, a separate supporting ring for the counterpart ring is omitted, such that the slide ring seal according to the invention has a construction which involves few components and which is robust.

The spring means is of bellows-like configuration. By means of this specific configuration, the spring means can absorb torque inputs and have a compensating action such that the sealing surfaces of the slide ring and of the counterpart ring are permanently oriented relative to one another in an operationally capable manner.

The bellows-like spring means bears by way of an annular stop region against the slide ring and is fixed by way of an annular connection region to a housing, wherein the stop region and the connection region are connected to one another by at least one elastically deformable hinge region. By means of this specific refinement, the spring means has imparted to it a geometric shape which, while being deflectable to a small extent in the axial direction, makes it possible for the required radial and torsional stiffness to be ensured. It is nevertheless possible, by means of the hinge region and a suitable selection of the stiffness of the elastomer, for an adequate contact-pressure force to be exerted on the slide ring.

Consequently, the object as stated in the introduction is achieved.

The projection could be in the form of a cylindrical sleeve. A cylindrical sleeve can encircle a shaft. The cylindrical sleeve may be pushed in the manner of a ring over a shaft and be fixed thereto by means of an interference fit.

The spring means could be manufactured from a polymer. Polymers are inexpensive. Surprisingly, polymers or plastics are stable enough to satisfy the mechanical requirements placed on a spring means.

Against this background, the spring means could be manufactured from an elastomer. In particular, it is conceivable for the elastomer to be manufactured from, or have, a natural rubber. A spring means composed of an elastomer can absorb torsional deformations in a particularly effective manner and compensate these such that the sealing surfaces of the slide ring and of the counterpart ring are suitably oriented relative to one another.

Against this background, the hinge region could be of S-shaped form in cross section. In this way, while a small amount of deflection is permitted in an axial direction, the required radial and torsional stiffness is ensured.

At least one sealing surface could have elevations or unevennesses of a size of 0.1 $\mu$m to W, wherein W is calculated in accordance with formula

$$W = 0.03 Dm / s \text{,}$$

wherein the mean diameter Dm represents the mean value of outer diameter and inner diameter of the circular-ring-shaped sealing surface and wherein s represents the thickness of the slide ring or counterpart ring. It has surprisingly been identified that manufacturing-induced unevennesses on the slide ring and/or on the counterpart ring can be compensated by the bellows-like spring means. Cumbersome rectification and reworking of sealing surfaces of counterpart rings and slide rings is thus not necessary. An elevation, unevenness or evenness within the context of this description is measured in accordance with DIN ISO 1101. The above-specified factor of 0.03 may also assume a higher value that a person skilled in the art may find suitable on the basis of this description.

At least one sealing surface could have elevations or unevennesses of a size of 0.1 $\mu$m to 500 $\mu$m. The slide ring and/or the counterpart ring could have a thickness of at most 5 mm. It has surprisingly been identified that a slide ring seal in which the counterpart rings and slide rings are very thin, specifically are of virtually foil-like form, exhibit particularly high operational capability. Particularly thin slide rings and counterpart rings can be oriented relative to one another in an ideal manner by the spring force of a bellows-like spring means. In this way, during operation, a gap shape is generated which is dependent only to a very small extent on manufacturing tolerances of the sealing surfaces and which always adapts and aligns in an ideal manner. The gap shape may be of slightly divergent, parallel or else convergent cross section.

The projection could encircle the shaft. In this way, the projection can be pressed onto the shaft with an interference fit.

Against this background, the projection could be seated on the shaft with an interference fit. The counterpart ring can be mounted on a shaft without problems by means of an interference fit.

The projection could have a portion which faces toward the sealing surface of the counterpart ring, which portion encircles the shaft so as to form an encircling gap. The introduction of the projection onto the shaft is facilitated in this way. By means of a suitable configuration of the projection, the latter is also tolerant and robust with respect to diameter fluctuations of the shaft. The projection could run conically in regions and be designed so as to provide a region which does not bear against the shaft and which thus does not transmit to the counterpart ring the deformations induced by the interference fit. This leads to a small positional error of the counterpart ring during assembly, and renders the slide ring seal as a whole highly robust.

As a result of the formation of the encircling gap, decoupling of the counterpart ring from plastic deformations in the sheet metal of the projection is realized. Since, as a result of the decoupling, very large overlaps and plastic deformations are permissible in the sheet metal, the sealing seat thereof may be of metallic configuration without additional sealing aids. A metallic seal or sealing action can be realized. The plastic deformation reliably closes off leakage channels. The projection could be sealed off statically with respect to the shaft. The static seal may be fully rubberized, partially rubberized, provided with sealing lacquer or of metallically sealing configuration.

The encircling gap could be in the form of a conical gap. Stresses and deformations of the projection can thus be reduced. Pressing-in of the projection can be realized in an effective manner.

It is preferable if one third of the projection does not bear against the shaft. A deformation of the counterpart ring is thereby decoupled from any tolerances introduced by the interference fit. The counterpart ring and the projection formed in one piece therewith are preferably of L-shaped form in cross section at least in regions. This permits simple manufacturing. Moreover, very thin wall thicknesses can be realized. In this way, flexibility of the counterpart ring is attained which renders the latter insensitive with respect to manufacturing tolerances of the sealing surfaces. The counterpart ring together with projection is so robust in the uninstalled state that manufacturing-induced and force-induced deformations, in particular a conicity, are not adversely affected during assembly.

Said slide ring seal is preferably in the form of a gas-lubricated slide ring seal with hydrodynamic lift channels in the sealing surfaces.

The slide ring seal described here may be used for gearbox seals with high sliding speeds and moderate pressures. It is in particular conceivable for the slide ring seal to be used in the automotive industry. Here, specifically, it is conceivable for the slide ring seal to be used as a turbocharger seal, crankshaft seal, gearbox seal or electric motor seal.

Further uses for the slide ring seal described here are conceivable.

Brief description of the drawing

In the drawing:

figure 1   is a sectional view of the upper part of a slide ring seal, in which the counterpart ring and a projection projecting therefrom in an axial direction are formed in one piece, and

figure 2   is a partial sectional view of a projection formed in one piece with a counterpart ring, which projection is fastened to a shaft with an interference fit, in such a way that an encircling gap is formed.

Embodiment of the invention

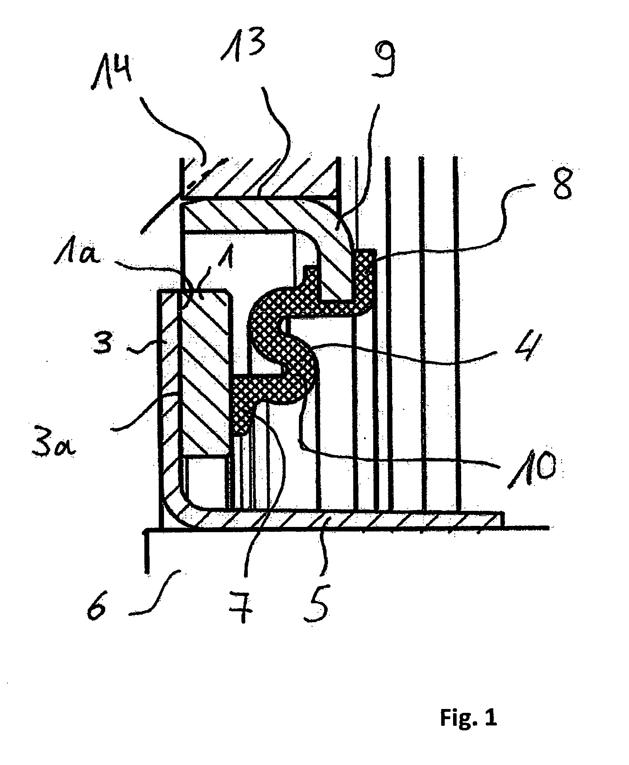

Figure 1 shows a slide ring seal, comprising a slide ring 1, which is mounted in an axially movable manner, and a counterpart ring 3, wherein the slide ring 1 and the counterpart ring 3 each have sealing surfaces 1a, 3a which bear against one another, wherein the sealing surface 1 a of the slide ring 1 is situated opposite the sealing surface 3a of the counterpart ring 3, and wherein the slide ring 1 is pressed against the counterpart ring 3 by a spring means 4.

The counterpart ring 3 is formed in one piece with an axial projection 5 which can be assigned to a shaft 6 in order to fix the counterpart ring 3 on the shaft 6. The projection 5 is in the form of a cylindrical sleeve. The projection 5 is formed in one piece with the counterpart ring 3 in a materially integral manner. The counterpart ring 3 and the projection 5 form a single separate component which is of L-shaped form in cross section in regions, specifically on one side of the axis of rotation. The component is manufactured preferably from sheet metal.

The spring means 4 is of bellows-like form. The spring means 4 is manufactured from an elastomer. The bellows-like spring means 4 bears by way of an annular stop region 7 against the slide ring 1 and is fixed by way of an annular connection region 8 to a housing 9, wherein the stop region 7 and the connection region 8 are connected to one another by at least one elastically deformable hinge region 10. The stop region 7, the connection region 8 and the hinge region 10 are formed in one piece in a materially integral manner. A natural rubber is preferably used for the manufacture of the bellows-like spring means 4.

At least one sealing surface 1 a and/or 3a has elevations or unevennesses of a size of 0.1 $\mu$m to 500 $\mu$m. The slide ring 1 and/or the counterpart ring 3 have/has a thickness of at most 5 mm. In this way, the slide ring 1 and the counterpart ring 3 exhibit a particularly high level of flexibility. The slide ring 1 and the counterpart ring 3 are manufactured preferably from sheet metal.

Figure 1 shows a slide ring seal in which a region 13 of the housing is applied to a counterpart wall 14 in a metallically sealing, fully rubberized or partially rubberized manner or with the interposition of a sealing compound, in particular a sealing lacquer.

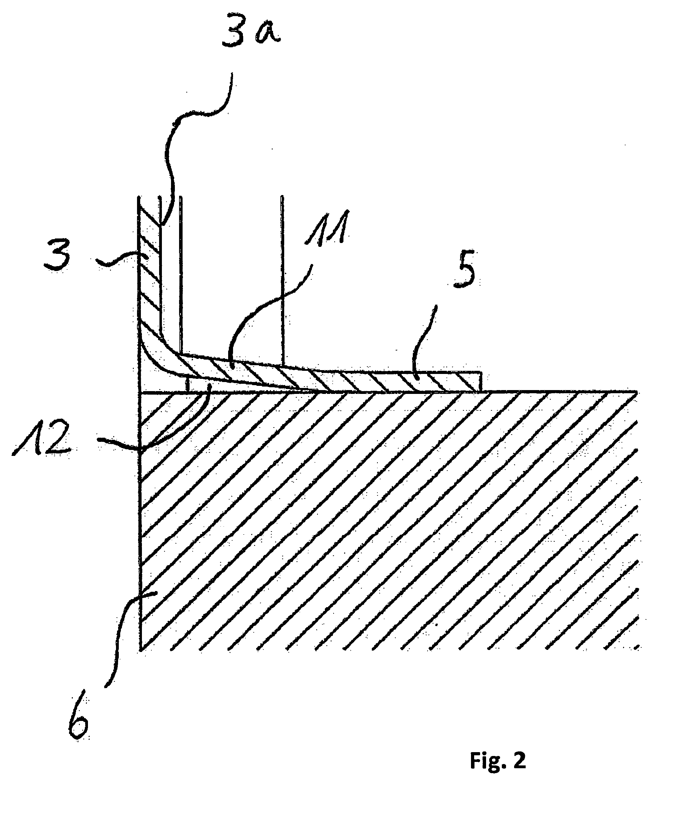

Figure 2 shows an arrangement comprising a shaft 6 and, in sections, a slide ring seal of the type described here, wherein the projection 5 encircles the shaft 6. The projection 5 is seated on the shaft 6 with an interference fit and connected in a rotationally conjoint manner thereto. The projection 5 has a portion 11 which faces the sealing surface 3a of the counterpart ring 3, which portion encircles the shaft 6 so as to form an encircling gap 12. Specifically, the final third of the projection 5 is of conical form such that, after the projection 5 is pressed onto the shaft 6, said final third does not bear against said shaft. In this way, the counterpart ring 3 is decoupled from deformations and stresses which can be introduced by the interference fit. The gap 12 is formed so as to taper to a point on the side facing toward the slide ring 1. In this way, a conical gap is formed.

**Claims**

1.   Slide ring seal, comprising a slide ring (1) which is mounted in an axially movable manner and a counterpart ring (3), wherein the slide ring (1) and the counterpart ring (3) each have sealing surfaces (1 a, 3a) which bear against one another, wherein the sealing surface (1 a) of the slide ring (1) is situated opposite the sealing surface (3a) of the counterpart ring (3), wherein the slide ring (1) is pressed against the counterpart ring (3) by a spring means (4), wherein the counterpart ring (3) is formed in one piece with an axial projection (5) which can be assigned to a shaft (6) in order to fix the counterpart ring (3) on the shaft (6) and wherein the spring means (4) is configured in the manner of a bellows, **characterized in that** the bellows-like spring means (4) bears by way of an annular stop region (7) against the slide ring (1) and is fixed by way of an annular connection region (8) to a housing (9), wherein the stop region (7) and the connection region (8) are connected to one another by at least one elastically deformable hinge region (10).

2.   Slide ring seal according to Claim 1, **characterized in that** the projection (5) is in the form of a cylindrical sleeve.

3. Slide ring seal according to Claim 1 or 2, **characterized in that** the spring means (4) is manufactured from a polymer.

4. Slide ring seal according to Claim 3, **characterized in that** the polymer is in the form of an elastomer.

5. Slide ring seal according to one of Claims 1 to 4, **characterized in that** the hinge region (10) is of S-shaped form in cross section.

6. Slide ring seal according to one of Claims 1 to 5, **characterized in that** at least one sealing surface (1 a, 3a) has elevations or unevennesses of a size of 0.1 $\mu$m to W, wherein W is calculated in accordance with formula

$$W = 0.03 Dm/s \; ,$$

wherein the mean diameter Dm represents the mean value of outer diameter and inner diameter of the circular-ring-shaped sealing surface (1a, 1b) and wherein s represents the thickness of the slide ring (1) or counterpart ring (3).

7. Arrangement comprising a shaft (6) and a slide ring seal according to one of the preceding claims, wherein the projection (5) encircles the shaft (6).

8. Arrangement according to Claim 7, **characterized in that** the projection (5) is seated on the shaft (6) with an interference fit.

9. Arrangement according Claim 7 or 8, **characterized in that** the projection (5) has a portion (11) which faces toward the sealing surface (3a) of the counterpart ring (3), which portion encircles the shaft (6) so as to form an encircling gap (12).

10. Arrangement according Claim 9, **characterized in that** the gap (12) is in the form of a conical gap.

**Patentansprüche**

1. Gleitringdichtung, aufweisend einen Gleitring (1), der axial beweglich angebracht ist, und einen Gegenstückring (3), wobei der Gleitring (1) und der Gegenstückring (3) jeder Dichtungsflächen (1a, 3a) aufweisen, die aneinander anliegen, wobei die Dichtungsfläche (1a) des Gleitrings (1) der Dichtungsfläche (3a) des Gegenstückrings (3) gegenüberliegt, wobei der Gleitring (1) durch ein Federmittel (4) an den Gegenstückring (3) gepresst ist, wobei der Gegenstückring (3) einstückig mit einem axialen Vorsprung (5) ausgebildet ist, der einem Schaft (6) zugeordnet sein kann, um den Gegenstückring (3) am Schaft (6) zu befestigen, und wobei das Federmittel (4) in der Art eines Balgs konfiguriert ist, **dadurch gekennzeichnet, dass** das balgartige Federmittel (4) durch einen ringförmigen Anschlagbereich (7) am Gleitring (1) anliegt und durch einen ringförmigen Verbindungsbereich (8) an einem Gehäuse (9) befestigt ist, wobei der Anschlagbereich (7) und der Verbindungsbereich (8) durch mindestens einen elastisch verformbaren Drehgelenkbereich (10) miteinander verbunden sind.

2. Gleitringdichtung nach Anspruch 1, **dadurch gekennzeichnet, dass** der Vorsprung (5) die Form einer zylindrischen Hülse aufweist.

3. Gleitringdichtung nach Anspruch 1 oder 2, **dadurch gekennzeichnet, dass** das Federmittel (4) aus einem Polymer gefertigt ist.

4. Gleitringdichtung nach Anspruch 3, **dadurch gekennzeichnet, dass** das Polymer in der Form eines Elastomers ist.

5. Gleitringdichtung nach einem der Ansprüche 1 bis 4, **dadurch gekennzeichnet, dass** der Drehgelenkbereich (10) im Querschnitt eine S-Form aufweist.

6. Gleitringdichtung nach einem der Anspräche 1 bis 5, **dadurch gekennzeichnet, dass** mindestens eine Dichtungsfläche (1a, 3a) Erhöhungen oder Ungleichmäßigkeiten mit einer Größe von 0,1 $\mu$m bis W aufweist, wobei W gemäß der Formel

$$W = 0,03Dm/s$$

berechnet wird, wobei der Mitteldurchmesser Dm den Außendurchmesser- und Innendurchmessermittelwert der kreisringförmigen Dichtungsfläche (1a, 1b) darstellt, und wobei s die Stärke des Gleitrings (1) oder Gegenstückrings (3) darstellt.

**7.** Anordnung, aufweitend einen Schaft (6) und eine Gleitringdichtung gemäß einem der vorhergehenden Ansprüche, wobei der Vorsprung (5) den Schaft (6) umgibt.

**8.** Anordnung nach Anspruch 7, **dadurch gekennzeichnet, dass** der Vorsprung (5) am Schaft (6) mit einer Übermaßpassung abgedichtet ist.

**9.** Anordnung nach Anspruch 7 oder 8, **dadurch gekennzeichnet, dass** der Vorsprung (5) einen Abschnitt (11) aufweist, der zur Dichtungsfläche (3a) des Gegenstückrings (3) hin gerichtet ist, wobei der Anschnitt den Schaft (6) zum Ausbilden eines Umgebungsspalts (12) umgibt.

**10.** Anordnung nach Anspruch 9, **dadurch gekennzeichnet, dass** der Spalt (12) die Form eines konischen Spalts aufweist.


## Revendications

**1.** Joint d'étanchéité à anneau de glissement, comprenant un anneau de glissement (1) qui est installé de manière axialement mobile et un contre-anneau (3), l'anneau de glissement (1) et le contre-anneau (3) comportant chacun des surfaces d'étanchéité (1a, 3a) qui sont en appui l'une contre l'autre, la surface d'étanchéité (1a) de l'anneau de glissement (1) étant située à l'opposé de la surface d'étanchéité (3a) du contre-anneau (3), l'anneau de glissement (1) étant pressé contre le contre-anneau (3) par le biais d'un moyen formant ressort (4), le contre-anneau (3) étant réaliste d'un seul tenant avec une partie saillante (5) axiale qui peut être associée à un arbre (6) afin de fixer le contre-anneau (3) sur l'arbre (6) et le moyen formant ressort (4) étant configuré à la manière d'un soufflet, **caractérisé en ce que** le moyen formant ressort (4) de type soufflet est en appui, par le biais d'une région d'arrêt annulaire (7), contre l'anneau de glissement (1) et est fixé, par le biais d'une région de raccordement annulaire (8), à un boîtier (9), la région d'arrêt (7) et la région de raccordement (8) étant raccordées l'une à l'autre par le biais d'au moins une région formant charnière déformable élastiquement (10).

**2.** Joint d'étanchéité à anneau de glissement selon la revendication 1, **caractérisé en ce que** la partie saillante (5) se présente sous la forme d'un manchon cylindrique.

**3.** Joint d'étanchéité à anneau de glissement selon la revendication 1 ou 2, **caractérisé en ce que** le moyen formant ressort (4) est fabriqué à partir d'un polymère.

**4.** Joint d'étanchéité à anneau de glissement selon la revendication 3, **caractérisé en ce que** le polymère se présente sous la forme d'un élastomère.

**5.** Joint d'étanchéité à anneau de glissement selon l'une des revendications 1 à 4, **caractérisé en ce que** la région formant charnière (10) présente une section transversale en forme de S.

**6.** Joint d'étanchéité à anneau de glissement selon l'une des revendications 1 à 5, **caractérisé en ce qu'**au moins une surface d'étanchéité (1a, 3a) comporte des protubérances ou des irrégularités d'une taille de 0,1 $\mu$m à W, W étant calculé suivant la formule

$$W = 0,03Dm/s,$$

où le diamètre moyen Dm représente la valeur moyenne du diamètre extérieur et du diamètre intérieur de la surface d'étanchéité de forme annulaire circulaire (1a, 1b) et s représente l'épaisseur de l'anneau de glissement (1) ou du contre-anneau (3).

7. Agencement comprenant un arbre (6) et un joint d'étanchéité à anneau de glissement selon l'une des revendications précédentes, la partie saillante (5) entourant l'arbre (6).

8. Agencement selon la revendication 7, **caractérisé en ce que** la partie saillante (5) est disposée sur l'arbre (6) par le biais d'un ajustement avec serrage.

9. Agencement selon la revendication 7 ou 8, **caractérisé en ce que** la partie saillante (5) comporte une partie (11) qui est orientée en direction de la surface d'étanchéité (3a) du contre-anneau (3), ladite partie entourant l'arbre (6) de façon à former un espace périphérique (12).

10. Agencement selon la revendication 9, **caractérisé en ce que** l'espace (12) se présente sous la forme d'un espace conique.

**Fig. 1**

EP 2 815 158 B1

Fig. 2

9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2061411 A
- ES 2159958 T3
- US 20040245729 A1
- US 20040070151 A1
- DE 102011114349 A1